# EUROPÄISCHE PATENTANMELDUNG

(11) **EP 4 512 704 A1**
(43) Veröffentlichungstag der Anmeldung: **26.02.2025**
(21) Anmeldenummer: 24191938.0
(22) Anmeldetag: 31.07.2024
(51) Int. Cl.: B62H 3/02, B60R 9/10

(54) **BEFESTIGUNGSSYSTEM ZUR BEFESTIGUNG EINES FAHRRADS AN EINEM FAHRRADTRÄGER**

(30) Priorität: 25.08.2023 DE 102023122845
(71) Anmelder: BOS Technology Services GmbH, 73760 Ostfildern (DE)
(72) Erfinder: Sang, Johannes, 55278 Undenheim (DE); Reichel, Johannes, 34289 Zierenberg (DE)
(74) Vertreter: Patentanwälte Ruff, Wilhelm, Beier, Dauster & Partner mbB

(57) **Zusammenfassung**

Die Erfindung betrifft ein Befestigungssystem zur Befestigung eines Fahrrads an einem Fahrradträger, aufweisend eine Befestigungseinheit mit einem Verriegelungsmechanismus, wobei die Befestigungseinheit zur Montage an einem Trägerbauteil des Fahrradträgers eingerichtet ist, und eine Verriegelungsgeometrie, die komplementär zu dem Verriegelungsmechanismus gestaltet und dazu eingerichtet ist, lösbar formschlüssig mit dem Verriegelungsmechanismus zusammenzuwirken, wobei die Verriegelungsgeometrie an einem Adapterteil ausgebildet ist, das zur permanenten Anbringung an einer hierfür definierten Stelle des Fahrrads eingerichtet ist, oder wobei die Verriegelungsgeometrie an einem Bauteil des Fahrrads ausgebildet ist, und wobei der Verriegelungsmechanismus überführbar ist zwischen einem Verriegelungszustand, in welchem der Verriegelungsmechanismus lösbar formschlüssig mit der Verriegelungsgeometrie verriegelt ist, und einem Freigabezustand, in welchem die Verriegelung aufgehoben ist.

## Beschreibung

Die Erfindung betrifft ein Befestigungssystem zur Befestigung eines Fahrrads an einem Fahrradträger.

Aus dem Stand der Technik sind Fahrradträger bekannt, die mit flexiblen Gurtbändern zur Befestigung des zu transportierenden Fahrrads ausgestattet sind. Solche flexiblen Gurtbänder sind oftmals als Textilband oder Rastband ausgeführt. Zur Befestigung wird das flexible Gurtband um den Rahmen des Fahrrads oder um dessen Felge gelegt und gespannt. Auf diese Weise können Fahrräder unterschiedlicher Größe und Geometrie befestigt werden. Allerdings muss der Benutzer selbst entscheiden, an welcher Stelle des Fahrrads er das flexible Gurtband anlegt und verzurrt. Wählt der Benutzer eine zur Befestigung ungeeignete Position, kann dies zu Problemen führen. Bei Fahrrädern mit Karbonrahmen oder rahmenintegrierten Akkus kann die Anlage des Gurtbandes zu ungewollten Lastfällen und damit zu einer Überbeanspruchung oder gar Beschädigung des Rahmens führen. Eine ungünstige Position des Gurtbandes kann zudem ein Aufschaukeln des Fahrrads auf dem Fahrradträger im Fahrbetrieb begünstigen. Ein solches Aufschaukeln kann zu Beschädigungen des Fahrrads, des Fahrradträgers oder gar des den Fahrradträger tragenden Fahrzeugs führen. Im Übrigen ist eine Befestigung mit Gurtbändern auch im Hinblick auf die sich ergebende Ergonomie und den Diebstahlschutz nicht optimal.

Aufgabe der Erfindung ist es, ein Befestigungssystem bereitzustellen, das eine einfache, zuverlässige und möglichst bedienerunabhängige Befestigung des Fahrrads an dem Fahrradträger erlaubt.

Diese Aufgabe wird durch das Bereitstellen eines Befestigungssystems mit den Merkmalen des Anspruchs 1 gelöst.

Das erfindungsgemäße Befestigungssystem weist eine Befestigungseinheit mit einem Verriegelungsmechanismus auf, wobei die Befestigungseinheit zur Montage an einem Trägerbauteil des Fahrradträgers eingerichtet ist. Das erfindungsgemäße Befestigungssystem weist zudem eine Verriegelungsgeometrie auf, die komplementär zu dem Verriegelungsmechanismus gestaltet und dazu eingerichtet ist, lösbar formschlüssig mit dem Verriegelungsmechanismus zusammenzuwirken. Die Verriegelungsgeometrie ist an einem Adapterteil ausgebildet, das zur permanenten Anbringung an einer hierfür definierten Stelle des Fahrrads eingerichtet ist. Alternativ ist die Verriegelungsgeometrie an einem Bauteil des Fahrrads ausgebildet. Der Verriegelungsmechanismus ist zwischen einem Verriegelungszustand und einem Freigabezustand überführbar. In dem Verriegelungszustand ist der Verriegelungsmechanismus lösbar formschlüssig mit der Verriegelungsgeometrie verriegelt. In dem Freigabezustand ist der Verriegelungsmechanismus von der Verriegelungsgeometrie gelöst und die Verriegelung ist aufgehoben. Die erfindungsgemäße Lösung erlaubt eine einfache und zuverlässige Befestigung. Da das Adapterbauteil zur permanenten Anbringung an einer hierfür definierten Stelle des Fahrrads eingerichtet ist oder die Verriegelungsgeometrie selbst ist an einer definierten Stelle eines Bauteils des Fahrrads ausgebildet ist, erfolgt die Befestigung stets an ein und derselben und hierfür vorgesehenen Stelle des Fahrrads. Hierdurch wird verhindert, dass der Benutzer eine ungeeignete Befestigungsstelle auswählt, wie dies bei der Verwendung von Gurtbändern grundsätzlich möglich ist. Durch die erfindungsgemäße Lösung können folglich durch eine unsachgemäße Befestigung bedingte Beschädigungen an dem Fahrrad, dem Fahrradträger oder einem den Fahrradträger tragenden Fahrzeug vermieden werden. Die Befestigungseinheit ist dem Fahrradträger zugeordnet und zu diesem Zweck zur Montage an einem Trägerbauteil des Fahrradträgers eingerichtet. Bei dem Trägerbauteil kann es sich beispielsweise um einen Haltearm, einen Haltebügel oder dergleichen handeln. Die Verriegelungsgeometrie ist dem Fahrrad zugeordnet und komplementär zu dem Verriegelungsmechanismus der Befestigungseinheit gestaltet. Bei Ausgestaltungen der Erfindung ist die Verriegelungsgeometrie an dem besagten Adapterteil ausgebildet. Das Adapterteil ist zur permanenten Anbringung an einer hierfür definierten Stelle des Fahrrads eingerichtet. Permanente Anbringung meint, dass das Adapterteil zum dauerhaften Verbleib an dem Fahrrad eingerichtet ist und auch während der Benutzung des Fahrrads nicht abgenommen wird. Das Adapterteil ist bei unterschiedlichen Ausgestaltungen zur Anbringung an unterschiedlichen Stellen des Fahrrads eingerichtet. Bevorzugt ist eine Anbringung an dem Rahmen, insbesondere Rahmendreieck, des Fahrrads, da hierdurch eine möglichst zentrale Kraftübertragung der durch die Befestigung auftretenden Kräfte erreicht werden kann. Denkbar und möglich, aber weniger vorteilhaft, ist zudem eine Anbringung des Adapterteils an einem Hinterbau des Fahrrads (obere Hinterbaustreben, untere Hinterbaustreben). Bei einer Anbringung am Hinterbau des Fahrrads ist die resultierende Kraftübertragung weniger zentral und weiter abseits des Schwerpunkts des Fahrrads, so dass durch den Fahrbetrieb resultierende Bewegungen des Fahrrads unter Umständen nicht oder nicht ausreichend unterbunden werden können. Weiter denkbar und möglich ist eine Anbringung an der Gabel des Fahrrads, wobei die Beweglichkeit der Fahrradgabel um die Lenkachse zu nicht optimalen Befestigungsergebnissen führen kann. Das zur Position der permanenten Anbringung des Adapterteils Gesagte gilt, mutatis mutandis, auch für Ausgestaltungen, bei denen die Verriegelungsgeometrie unmittelbar an einem Bauteil des Fahrrads ausgebildet ist. Insoweit ist auch bei solchen Ausgestaltungen eine Positionierung der Verriegelungsgeometrie an dem Rahmen des Fahrrads besonders bevorzugt. Grundsätzlich möglich ist aber auch eine Ausbildung der Verriegelungsgeometrie an dem Hinterbau oder der Gabel des Fahrrads. In dem Verriegelungszustand wirken der Verriegelungsmechanismus der Befestigungseinheit und die Verriegelungsgeometrie lösbar formschlüssig zusammen. Die Verriegelungsgeometrie und der Verriegelungsmechanismus sind zueinander komplementär. Der Verriegelungsmechanismus kann auf unterschiedlichste Art ausgeführt sein. Grundsätzlich kommt jeder für den vorliegenden Zweck geeignete Verriegelungsmechanismus samt komplementärer Verriegelungsgeometrie infrage.

In Ausgestaltung der Erfindung ist das Adapterteil zur permanenten Anbringung an einem Oberrohr und/oder einem Unterrohr und/oder einem Sattelrohr des Fahrrads eingerichtet. Eine Anbringung an dem Oberrohr und/oder dem Unterrohr und/oder dem Sattelrohr erlaubt eine Kraftübertragung in Nähe des Schwerpunkts des Fahrrads. Hierdurch können übermäßige Bewegungen und hieraus resultierend Beanspruchungen während des Transports des auf dem Fahrradträger befestigten Fahrrads vermieden werden. Zur permanenten Anbringung des Adapterteils ist grundsätzlich jedes hierfür geeignete Fügeverfahren möglich. Das Adapterteil kann folglich form-, kraft- und/oder stoffschlüssig an dem betreffenden Rohr des Fahrradrahmens permanent angebracht werden.

In weiterer Ausgestaltung ist das Adapterteil zur Schraubbefestigung eingerichtet und weist wenigstens eine Aufnahmebohrung zur Aufnahme einer Befestigungsschraube auf. Eine Schraubbefestigung des Adapterteils an dem Oberrohr, Unterrohr oder Sattelrohr ist mit einfachen Mitteln kostengünstig und zuverlässig ausführbar.

In weiterer Ausgestaltung der Erfindung weist das Adapterteil zwei Aufnahmebohrungen auf, die in einem Abstand von 65 mm oder in einem Abstand von 85 mm angeordnet sind. Übliche Fahrradrahmen sind oftmals mit vorgefertigten Gewindebohrungen zur Befestigung von Getränkeflaschenhaltern ausgestattet. Die vorgefertigten Gewindebohrungen sind in der Regel in das Unterrohr und/oder Sattelrohr eingebracht, wobei ein Bohrungsabstand an dem Unterrohr üblicherweise 65 mm und an dem Sattelrohr üblicherweise 85 mm beträgt. Bei dieser Ausgestaltung der Erfindung kann das Adapterteil aufgrund der maßlich abgestimmten Bohrungsabstände der Aufnahmebohrungen mit besonders geringem Aufwand permanent an dem Fahrrad angebracht werden, indem die üblicherweise zur Befestigung von Getränkeflaschenhaltern verwendeten Gewindebohrungen des Fahrradrahmens verwendet werden.

In weiterer Ausgestaltung der Erfindung ist die Verriegelungsgeometrie in Längsrichtung des Adapterbauteils mittig zwischen den Aufnahmebohrungen angeordnet. Hierdurch können vorteilhafte Kräfte- und Hebelverhältnisse an dem Adapterteil erreicht werden.

In weiterer Ausgestaltung der Erfindung weist das Adapterteil wenigstens eine Montageöse auf, die zur Aufnahme eines zylindrischen Bauteils oder Bauteilabschnitts des Fahrrads eingerichtet ist und mittels derer das Adapterteil permanent an dem zylindrischen Bauteil oder Bauteilabschnitt anbringbar ist. Als zylindrisches Bauteil oder der zylindrischer Bauteilabschnitt des Fahrrads kommt insbesondere dessen Sattelstütze, Steuerrohr oder Tretlagergehäuse infrage, wobei aber auch andere zylindrische Bauteile oder Bauteilabschnitte zur permanenten Anbringung der Montageöse denkbar sind. Die Montageöse des Adapterteils ist maßlich auf das entsprechende zylindrische Bauteil oder den zylindrischen Bauteilabschnitt abgestimmt. Zur permanenten Anbringung des Adapterteils werden die Montageöse und das betreffende zylindrische Bauteil/der zylindrische Bauteilabschnitt axial zusammengesteckt. Dabei kann das Adapterteil mit der Montageöse voran auf das zylindrische Bauteil/den Bauteilabschnitt aufgesteckt oder umgekehrt das zylindrische Bauteil/Bauteilabschnitt in die Montageöse eingesteckt werden. Bei dieser Ausgestaltung der Erfindung kann auf gesonderte Befestigungsmittel zur permanenten Anbringung des Adapterteils verzichtet werden. Die Anbringung ist deshalb besonders einfach und kann ohne Weiteres nachträglich von einem Benutzer selbst vorgenommen werden.

In weiterer Ausgestaltung der Erfindung ist das Adapterbauteil zur permanenten Anbringung an einer Sattelstütze des Fahrrads eingerichtet, wobei die Montageöse zur Aufnahme der Sattelstütze und/oder eines oberen Stirnendes des Sattelrohrs des Fahrrads eingerichtet ist. Die permanente Anbringung des Adapterteils an der Sattelstütze und/oder dem oberen Stirnende des Sattelrohrs erlaubt eine besonders vorteilhafte Kraftübertragung zwischen dem Fahrradträger und dem zu befestigenden Fahrrad. Zudem ist der besagte Bereich üblicherweise gut zugänglich, so dass sich auch ergonomische Vorteile ergeben. Zur Anbringung des Adapterteils wird bei dieser Ausgestaltung der Erfindung zunächst die Sattelstütze abgenommen. Sofern diese mit einem Schnellspanner befestigt ist, ist dies besonders einfach und ohne Werkzeug möglich. Hiernach wird das Adapterteil mit der Montageöse voran auf das obere Stirnende des Sattelrohrs aufgesteckt oder alternativ axial auf die Sattelstütze aufgeschoben. Abschließend wird die Sattelstütze wieder montiert.

In weiterer Ausgestaltung der Erfindung ist die Montageöse geschlitzt und das Adapterteil weist eine Schraubklemme auf, die zur Einstellung einer Weite der Montageöse eingerichtet ist. Durch die Schlitzung der Montageöse kann das Adapterteil auch bei montierter Sattelstütze angebracht werden. Zu diesem Zweck kann die Schraubklemme zunächst gelöst, hiernach das Adapterteil radial über den Schlitz in die Montageöse eingeführt werden. Hiernach wird die Schraubklemme angezogen und das Adapterteil auf diese Weise permanent an der Sattelstütze und/oder dem oberen Stirnende des Sattelrohrs befestigt. Alternativ oder zusätzlich kann die Schraubklemme des Adapterteils zur Befestigung der Sattelstütze dienen und hierdurch einen für diesen Zweck vorgesehenen Schnellspanner ersetzen.

In weiterer Ausgestaltung der Erfindung ist das Adapterteil zur permanenten Anbringung an einem Steuerrohr des Fahrrads eingerichtet, wobei die Montageöse zur Aufnahme eines oberen Stirnendes des Steuerrohrs und/oder eines Lenklagers des Fahrrads eingerichtet ist. Eine permanente Anbringung des Adapterteils am Steuerrohr des Fahrrads bietet sich insbesondere dann an, wenn Anbauteile bereits an der Sattelstütze befestigt sein sollten. Es ist aber auch möglich, dass eine permanente Anbringung des Adapterteils am Steuerrohr zusätzlich zu einem weiteren Adapterteil vorgesehen ist, das beispielsweise an der Sattelstütze oder dem Tretlager angebracht sein kann. Die permanente Anbringung des Adapterteils an dem Steuerrohr erfordert üblicherweise eine Demontage und Montage eines Lenkervorbaus des Fahrrads. Dies ist zwar im Vergleich zu der Montage/Demontage einer üblicherweise mit einem Schnellspanner befestigten Sattelstütze mit Mehraufwand verbunden. Umgekehrt ergibt sich aber auch ein verbesserter Diebstahlschutz für das Adapterteil und damit das gesamte auf dem Fahrradträger befestigte Fahrrad.

In weiterer Ausgestaltung der Erfindung ist das Adapterteil zur permanenten Anbringung an einem Tretlagergehäuse des Fahrrads eingerichtet und weist zwei koaxiale Montageösen auf, die zur Aufnahme axial gegenüberliegender Stirnenden des Tretlagergehäuses eingerichtet sind. Durch eine permanente Anbringung des Adapterteils an dem Tretlagergehäuse können vorteilhafte Kräfte- und/oder Hebeverhältnisse erreicht werden. Zur permanenten Anbringung des Adapterteils wird üblicherweise eine Demontage und erneute Montage der Tretkurbeln und/oder des Tretlagers des Fahrrads erforderlich sein. Dies geht einerseits mit einem gewissen Mehraufwand einher. Andererseits wird ein Diebstahl des auf diese Weise permanent angebrachten Adapterteils und damit des auf dem Fahrradträger befestigten Fahrrads entsprechend erschwert. Da das Adapterteil lediglich einmal permanent angebracht wird, überwiegt oftmals der Vorteil des verbesserten Diebstahlschutzes.

In weiterer Ausgestaltung der Erfindung ist die Verriegelungsgeometrie in Bezug auf die Axialrichtung mittig zwischen den beiden koaxialen Montageösen angeordnet. Hierdurch können symmetrische Kräfteverhältnisse an dem Adapterteil erreicht werden. Zudem ergeben sich ergonomische Vorteile, da die Verriegelungsgeometrie bei einer axial mittigen Anordnung grundsätzlich für den Benutzer des Fahrrads von beiden Seite gleichermaßen zugänglich ist.

In weiterer Ausgestaltung der Erfindung ist die Verriegelungsgeometrie an dem Rahmen des Fahrrads ausgebildet. Die Verriegelungsgeometrie ist vorzugsweise unmittelbar in den Rahmen eingebracht oder auf diesen aufgebracht. Bevorzugt ist eine Ausbildung der Verriegelungsgeometrie in und/oder an dem Oberrohr und/oder Unterrohr und/oder Sattelrohr des Fahrrads. Hierdurch ergeben sich besonders vorteilhafte Kräfteverhältnisse im Hinblick auf eine zentrale, schwerpunktnahe Krafteinleitung und Kraftableitung. Bei einer Ausbildung der Verriegelungsgeometrie an dem Rahmen (oder einem anderen hierfür geeigneten Bauteil) des Fahrrads ergibt sich einerseits der Vorteil, dass auf ein gesondertes Adapterteil mit Verriegelungsgeometrie verzichtet werden kann. Andererseits muss die Verriegelungsgeometrie konstruktiv auf Seiten des Herstellers des Fahrrads bereits berücksichtigt und hergestellt werden. Je nach Anwendungsfall und Art des zu befestigenden Fahrrads kann der eine oder der andere Vorteil überwiegen.

In weiterer Ausgestaltung der Erfindung ist die Verriegelungsgeometrie, insbesondere durch eine spanabhebende Bearbeitung des Rahmens, in Form einer Ausfräsung oder einer Bohrung an dem Rahmen des Fahrrads ausgebildet. Ausfräsungen oder Bohrungen sind mit üblichen Werkzeugen und Fertigungstechnologien einfach, kostengünstig und automatisiert herstellbar. Die Bohrung und/oder Ausfräsung ist unmittelbar in den Rahmen eingebracht.

In weiterer Ausgestaltung der Erfindung weist die Verriegelungsgeometrie wenigstens eine Verriegelungsöffnung auf und der Verriegelungsmechanismus weist wenigstens ein bewegliches Verriegelungselement auf, wobei das bewegliche Verriegelungselement in der Verriegelungsstellung formschlüssig in die Verriegelungsöffnung eingreift. Diese bevorzugte Ausgestaltung betrifft sowohl Varianten, bei welchen die Verriegelungsgeometrie an einem Adapterteil ausgebildet ist, als auch solche, bei denen die Verriegelungsgeometrie an einem Bauteil, insbesondere dem Rahmen, des Fahrrads ausgebildet ist. Die Verriegelungsöffnung ist komplementär zu dem wenigstens einen beweglichen Verriegelungselement. Durch die komplementäre Gestaltung kann in dem Verriegelungszustand der besagte Formschluss zwischen Verriegelungselement und Verriegelungsöffnung hergestellt werden. Vorzugsweise hintergreift das bewegliche Verriegelungselement die Verriegelungsöffnung. Zu diesem Zweck weist die Verriegelungsöffnung vorzugsweise einen Hinterschnitt auf.

In weiterer Ausgestaltung der Erfindung ist der Verriegelungsmechanismus ein Hakenmechanismus, wobei das wenigstens eine Verriegelungselement ein schwenkbeweglicher Verriegelungshaken ist, wobei die wenigstens eine Verriegelungsöffnung eine Nut mit einem Hinterschnitt ist, und wobei der wenigstens eine Verriegelungshaken in der Verriegelungsstellung formschlüssig mit dem Hinterschnitt der Nut zusammenwirkt. Durch eine Gestaltung des Verriegelungsmechanismus als Hakenmechanismus können besondere Vorteile erzielt werden.

In weiterer Ausgestaltung der Erfindung ist der Verriegelungsmechanismus ein Sperrkugelmechanismus, wobei das wenigstens eine Verriegelungselement eine bewegliche Sperrkugel ist, wobei die wenigstens eine Verriegelungsöffnung eine Bohrung mit einem Hinterschnitt ist, und wobei die wenigstens eine Sperrkugel in der Verriegelungsstellung formschlüssig mit dem Hinterschnitt zusammenwirkt. Durch eine Gestaltung des Verriegelungsmechanismus als Sperrkugelmechanismus können besondere Vorteile erzielt werden.

In weiterer Ausgestaltung der Erfindung ist der Verriegelungsmechanismus ein Schlossmechanismus nach Art eines Gurtschlosses, wobei die Verriegelungsöffnung an einer Schlosszunge ausgebildet ist, die in der Verriegelungsstellung in einen Aufnahmeschlitz der Befestigungseinheit eingesteckt ist und formschlüssig mit dem wenigstens einen beweglichen Verriegelungselement zusammenwirkt. Gurtschlösser sind für Rückhaltesysteme in Fahrzeugen weit verbreitet und weisen eine Schlosszunge mit einer Öffnung auf. Zum Schließen des Gurtschlosses wird die Schlosszunge in einen hierfür vorgesehenen Aufnahmeschlitz des Gurtschlosses eingesteckt und auf grundsätzlich bekannte Weise mit einem beweglichen Verriegelungselement verriegelt. Diese Ausgestaltung der Erfindung macht sich die als solche bekannte Gestaltung und Funktionsweise von Gurtschlössern zunutze und überträgt diese auf die Befestigung des Fahrrads. Zu diesem Zweck ist die Verriegelungsöffnung an einer Schlosszunge ausgebildet und die Befestigungseinheit weist einen Aufnahmeschlitz nach Art eines Gurtschlosses auf, in welchem die Schlosszunge zum Verriegeln eingesteckt werden kann. Diese Ausgestaltung der Erfindung ist besonders vorteilhaft in Kombination mit Ausgestaltungen, die ein Adapterteil mit Montageöse vorsehen.

Die Erfindung betrifft zudem einen Fahrradträger mit einem Trägerbauteil und einer an dem Trägerbauteil montierten Befestigungseinheit eines Befestigungssystems gemäß der vorhergehenden Beschreibung. Das Trägerbauteil ist vorzugsweise ein Haltebügel oder ein Abstandsarm. Die Befestigungseinheit ist vorzugsweise permanent mit dem besagten Trägerbauteil verbunden, beispielsweise verschraubt oder vernietet. Hinsichtlich der Gestaltung und Funktionsweise der Befestigungseinheit wird auf die vorhergehende Offenbarung zu dem erfindungsgemäßen Befestigungssystem und dessen Ausgestaltungen verwiesen und ausdrücklich Bezug genommen. Das dort zu der Befestigungseinheit Offenbarte gilt, mutatis mutandis, auch für die Befestigungseinheit des erfindungsgemäßen Fahrradträgers.

Die Erfindung betrifft zudem ein Fahrrad mit einer Verriegelungsgeometrie eines Befestigungssystems gemäß der vorhergehenden Beschreibung. Hinsichtlich der Verriegelungsgeometrie des erfindungsgemäßen Fahrrads wird auf die vorhergehende Offenbarung zu dem erfindungsgemäßen Befestigungssystem und dessen Ausgestaltungen verwiesen und ausdrücklich Bezug genommen. Das dort zu der Verriegelungsgeometrie Gesagte gilt, mutatis mutandis, auch für die Verriegelungsgeometrie des erfindungsgemäßen Fahrrads.

In Ausgestaltung der Erfindung ist die Verriegelungsgeometrie an einem permanent an dem Fahrrad angebrachten Adapterbauteil ausgebildet. Hinsichtlich des Adapterbauteils des Fahrrads wird auf die vorhergehende Offenbarung zu dem erfindungsgemäßen Befestigungssystem und dessen Ausgestaltungen verwiesen und ausdrücklich Bezug genommen. Das dort zu dem Adapterbauteil Gesagte gilt, mutatis mutandis, auch für das Adapterbauteil des Fahrrads.

In weiterer Ausgestaltung der Erfindung ist die Verriegelungsgeometrie an einem Bauteil des Fahrrads, insbesondere dessen Rahmen, ausgebildet. Auch diesbezüglich wird auf die vorhergehende Offenbarung zu dem erfindungsgemäßen Befestigungssystem und dessen Ausgestaltungen verwiesen. Das dort zur Ausbildung der Verriegelungsgeometrie an Bauteilen des Fahrrads Gesagte gilt, mutatis mutandis, auch für diese Ausgestaltung des erfindungsgemäßen Fahrrads.

Die Erfindung betrifft zudem eine Anordnung mit einem Fahrradträger gemäß der vorhergehenden Beschreibung und mit einem Fahrrad gemäß der vorhergehenden Beschreibung.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt eine schematische Perspektivansicht einer Ausführungsform einer erfindungsgemäßen Anordnung, die eine Ausführungsform eines erfindungsgemäßen Fahrradträgers und eine Ausführungsform eines erfindungsgemäßen Fahrrads umfasst, wobei das Fahrrad mittels einer Ausführungsform eines erfindungsgemäßen Befestigungssystems an dem Fahrradträger befestigt ist,
- Fig. 2: ein Detail der Anordnung nach Fig. 1 im Bereich des Befestigungssystems, wobei das Befestigungssystem einen Freigabezustand einnimmt,
- Fig. 3: das Detail nach Fig. 2, wobei das Befestigungssystem einen Verriegelungszustand einnimmt,
- Fig. 4: eine perspektivische Detailansicht einer weiteren Ausführungsform eines erfindungsgemäßen Befestigungssystems mit einem an dem Fahrrad permanent angebrachten Adapterteil und einer an einem Trägerteil des Fahrradträgers montierten Befestigungseinheit,
- Fig. 5: eine Perspektivansicht des Adapterteils des Befestigungssystems nach Fig. 4,
- Fig. 6: in schematischer Perspektivansicht eine weitere Ausführungsform eines erfindungsgemäßen Befestigungssystems,
- Fig. 7: eine Perspektivansicht eines Adapterteils des Befestigungssystems nach Fig. 6,
- Fig. 8: eine Perspektivansicht einer weiteren Ausführungsform eines erfindungsgemäßen Befestigungssystems,
- Fig. 9: eine Perspektivansicht eines Adapterteils des Befestigungssystems nach Fig. 8,
- Fig. 10: eine Perspektivansicht einer weiteren Ausführungsform eines erfindungsgemäßen Befestigungssystems,
- Fig. 11,12,13: schematische Schnittansichten zur Verdeutlichung von Details der Funktionsweise des Befestigungssystems nach den Fig. 1 bis 3 und des Befestigungssystems nach Fig. 10,
- Fig. 14: eine Perspektivansicht einer weiteren Ausführungsform eines erfindungsgemäßen Befestigungssystems und
- Fig. 15,16,17: schematische Schnittansichten zur Verdeutlichung von Details der Funktionsweise des Befestigungssystems nach Fig. 14.

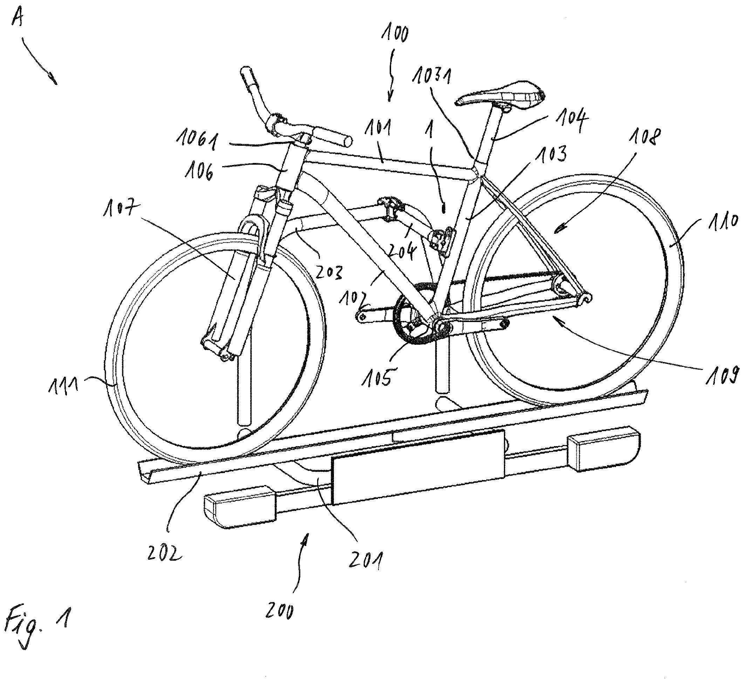

Gemäß Fig. 1 umfasst eine Anordnung A ein Fahrrad 100 und einen Fahrradträger 200, wobei das Fahrrad 100 mittels eines Befestigungssystems 1 an dem Fahrradträger 200 befestigt ist.

Das Fahrrad 100 weist einen Rahmen (ohne Bezugszeichen) mit einem Oberrohr 101, einem Unterrohr 102 und einem Sattelrohr 103 auf. In das Sattelrohr 103 ist eine den Sattel (ohne Bezugszeichen) des Fahrrads 100 tragende Sattelstütze 104 eingesteckt. Andernends ist das Sattelrohr 103 über ein Tretlagergehäuse 105 mit einem unteren Ende des Unterrohrs 102 verbunden. Ein frontseitiges Steuerrohr 106 verbindet die dem Sattelrohr 103 abgewandten Enden des Oberrohrs 101 und des Unterrohrs 102 miteinander. Das Fahrrad 100 weist vorliegend eine gefederte Gabel 107 auf, die um eine Lenkachse (ohne Bezugszeichen) schwenkbar in dem Steuerrohr 106 gelagert ist. Das Oberrohr 101, das Unterrohr 102, das Sattelrohr 103, das Tretlagergehäuse 105 und das Steuerrohr 106 bilden einen Hauptrahmen oder auch ein Rahmendreieck des Fahrrads 100. Heckseitig an das Rahmendreieck angeschlossen sind obere Hinterbaustreben 108 und untere Hinterbaustreben 109. Obere Enden der oberen Hinterbaustreben 108 sind an ein oberes Ende des Sattelrohrs 103 angeschlossen. Vordere Enden der unteren Hinterbaustreben 109 sind an das Tretlagergehäuse 105 angeschlossen. Dem Rahmendreieck abgewandte Enden der Hinterbaustreben 108, 109 sind im Bereich einer Achse eines Hinterrads 110 miteinander verbunden, wobei ein Vorderrad 111 an der Gabel 107 gelagert ist. Das Fahrrad 100 weist insoweit einen grundsätzlich bekannten Aufbau auf.

Der Fahrradträger 200 weist vorliegend eine Stützstruktur 201, eine Radschiene 202, eine Haltestruktur 203 und ein Trägerbauteil 204 auf. Die Stützstruktur 201 ist auf eine nicht näher, aber dem Fachmann bekannte Weise am Heck eines Kraftfahrzeugs montierbar. Die Radschiene 202 und die Haltestruktur 203 mitsamt des Trägerteils 204 sind an der Stützstruktur 201 montiert und auf dieser abgestützt. Die Radschiene 202 ist in einem an dem Kraftfahrzeug montierten Zustand des Fahrradträgers 200 in Querrichtung des Kraftfahrzeugs längserstreckt. Die Haltestruktur 203 ist vorliegend bügelförmig gestaltet und ragt in Hochrichtung von der Stützstruktur 201 auf. Das Trägerteil 204 ist vorliegend als Haltearm gestaltet und einends auf eine dem Fachmann bekannte Weise an der Haltestruktur 203 befestigt.

Das Fahrrad 100 ist auf der Radschiene 202 abgestellt und mittels des Befestigungssystems 1 an dem Fahrradträger 200 befestigt.

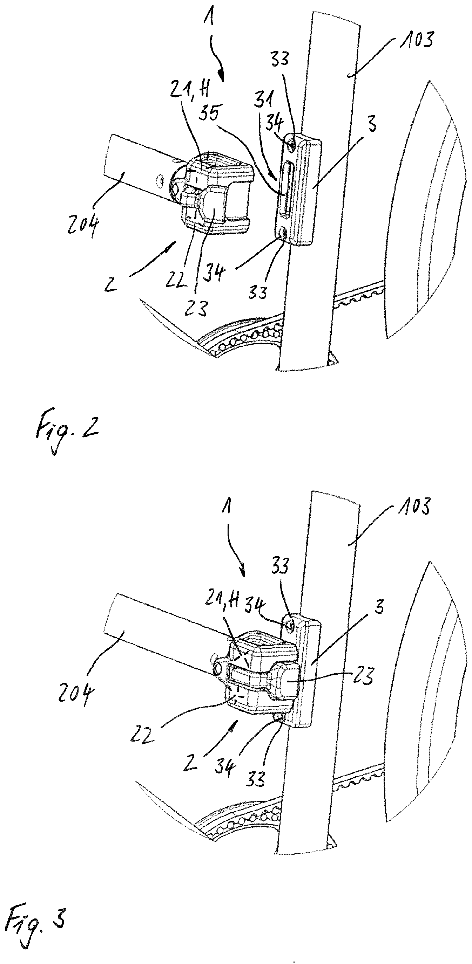

Das Befestigungssystem 1 weist eine dem Fahrradträger 200 zugeordnete Befestigungseinheit 2 und ein dem Fahrrad 100 zugeordnetes Adapterteil 3 auf (siehe Fig. 2, 3).

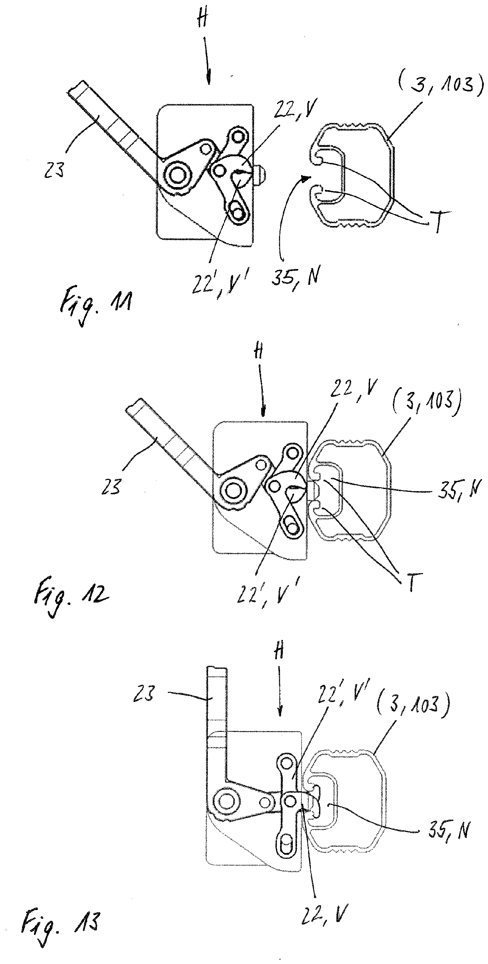

Die Befestigungseinheit 2 ist bei der gezeigten Ausführungsform an dem Trägerbauteil 204 montiert und fest mit diesem verbunden. Im Speziellen ist die Befestigungseinheit 2 an einem der Haltestruktur 203 abgewandten Ende des Trägerbauteils 204 angeordnet. Die Befestigungseinheit 2 weist einen Verriegelungsmechanismus 21 auf. Der Verriegelungsmechanismus 21 ist in den Fig. 2 und 3 nicht im Detail ersichtlich und wird nachfolgend noch näher anhand der Fig. 11 bis 13 erläutert. Der Verriegelungsmechanismus 21 kann auf jede für den vorliegenden Zweck geeignete Weise gestaltet sein.

Das Adapterteil 3 ist auf noch näher beschriebene Weise an einer hierfür definierten Stelle des Fahrrads 100 permanent angebracht. Bei der gezeigten Ausführungsform ist das Adapterteil 3 permanent an dem Sattelrohr 103 angebracht. Dabei ist das Adapterteil 3 vorliegend in Bezug auf eine Länge des Sattelrohrs 103 etwa mittig auf einer Innenseite des Rahmendreiecks, das heißt in Richtung einer Front des Fahrrads 100 weisend, positioniert.

Das Adapterteil 3 weist eine Verriegelungsgeometrie 31 auf, die komplementär zu dem Verriegelungsmechanismus 21 der Befestigungseinheit 2 gestaltet ist. Die Verriegelungsgeometrie 31 ist dazu eingerichtet, lösbar formschlüssig mit dem Verriegelungsmechanismus 21 zusammenzuwirken und umgekehrt.

Der Verriegelungsmechanismus 21 ist zwischen einem Verriegelungszustand (Fig. 3) und einem Freigabezustand überführbar (Fig. 2). In dem Verriegelungszustand ist der Verriegelungsmechanismus 21 lösbar formschlüssig mit der Verriegelungsgeometrie 31 verriegelt. Das Fahrrad 100 ist hierdurch über das Befestigungssystem 1 lösbar fest an dem Fahrradträger 200 befestigt. In dem Freigabezustand ist die Verriegelung zur Entnahme des Fahrrads 100 von dem Fahrradträger 200 gelöst.

Anstelle der in den Fig. 1 bis 3 gezeigten permanenten Anbringung des Adapterteils 3 an dem Sattelrohr 103 kann das Adapterteil 3 auch an anderen definierten Stellen des Fahrrads 100 positioniert sein. Bei in den Figuren nicht gezeigten Ausführungsformen ist eine permanente Anbringung des Adapterteils an dem Oberrohr oder dem Unterrohr vorgesehen. Grundsätzlich kann das Adapterteil an jeder lasttragenden Stelle des Fahrrads 100 positioniert sein, wobei eine Positionierung an dem aus dem Oberrohr 101, dem Unterrohr 102 und dem Sattelrohr 103 gebildeten Rahmendreieck aufgrund der sich ergebenden Nähe zu dem Schwerpunkt des Fahrrads 100 bevorzugt ist. Es ist aber auch eine Anbringung an dem die Hinterbaustreben 108, 109 umfassenden Hinterbau, der Sattelstütze 104, dem Tretlagergehäuse 105, dem Steuerrohr 106 oder der Gabel 107 möglich.

Da das Adapterteil 3 permanent angebracht ist, verbleibt es auch bei der üblichen Verwendung des Fahrrads 100 an der hierfür vorgesehenen Stelle. Es wird also nicht etwa nach dem Transport des Fahrrads 100 demontiert oder abgenommen. Mit anderen Worten ausgedrückt ist das Adapterteil 3 zum dauerhaften Verbleib an dem Fahrrad 100 eingerichtet.

Bei der in den Fig. 1 bis 3 gezeigten Ausführungsform ist das Adapterteil 3 zur Schraubbefestigung an dem Fahrrad 100 eingerichtet und weist zu diesem Zweck wenigstens eine Aufnahmebohrung 33 zur Aufnahme einer Befestigungsschraube 34 auf.

Vorliegend sind zwei Aufnahmebohrungen 33 zur Aufnahme jeweils einer Befestigungsschraube 34 vorhanden. Die Aufnahmebohrungen 33 sind in Längsrichtung des Adapterteils 3 voneinander beabstandet.

Der Abstand der Aufnahmebohrungen 33 beträgt bei der gezeigten Ausführungsform 85 mm. Übliche Fahrradrahmen weisen oftmals vorgefertigte Gewindebohrungen zur Befestigung von Getränkeflaschenhalterungen auf. Diese Gewindebohrungen sind in der Regel an der Innenseite des Sattelrohrs oder der Innenseite des Unterrohrs angebracht und in einem definierten Abstand voneinander positioniert. Der übliche Abstand am Sattelrohr beträgt die besagten 85 mm. Der Abstand der Aufnahmebohrungen 33 ist folglich auf einen üblichen Abstand der Gewindebohrungen abgestimmt. Hierdurch kann eine besonders einfache Anbringung des Adapterteils 3 an dem Fahrrad 100 erfolgen.

Die Verriegelungsgeometrie 31 ist vorliegend in Längsrichtung des Adapterteils 3 mittig zwischen den Aufnahmebohrungen 33 angeordnet.

Bei der gezeigten Ausführungsform weist die Verriegelungsgeometrie 31 wenigstens eine Verriegelungsöffnung 35 auf. Der Verriegelungsmechanismus 31 weist wenigstens ein bewegliches Verriegelungselement 22 auf. In der Verriegelungsstellung greift das bewegliche Verriegelungselement 22 formschlüssig in die wenigstens eine Verriegelungsöffnung 35 ein. Details hierzu werden nachfolgend anhand der Fig. 11, 12 und 13 erläutert. Dabei sei nochmals darauf hingewiesen, dass Details der Gestaltung des Verriegelungsmechanismus und der Verriegelungsgeometrie im Hinblick auf die vorliegende Erfindung nicht wesentlich sind. Grundsätzlich können der Verriegelungsmechanismus und die Verriegelungsgeometrie auf jede für den vorliegenden Zweck geeignete Weise gestaltet sein.

In den Fig. 11, 12 und 13 ist gezeigt, dass der Verriegelungsmechanismus 21 des Befestigungssystems nach den Fig. 1 bis 3 vorliegend als Hakenmechanismus H gestaltet ist. Dabei ist das wenigstens eine bewegliche Verriegelungselement 22 als schwenkbewegliche Verriegelungshaken V gestaltet. Die wenigstens eine Verriegelungsöffnung 35 der Verriegelungsgeometrie 31 ist als Nut N mit einem Hinterschnitt T ausgeführt. In der Verriegelungsstellung (Fig. 13) greift der wenigstens eine Verriegelungshaken V formschlüssig in die Nut N ein. Im Speziellen wird die Nut N hintergriffen und der wenigstens eine Verriegelungshaken 22 wirkt mit dem Hinterschnitt T der Nut N formschlüssig zusammen.

Bei der gezeigten Ausführungsform weist der Hakenmechanismus H ein weiteres bewegliches Verriegelungselement 22' in Form eines weiteren Verriegelungshakens V` auf. Die beiden Verriegelungshaken V, V` sind vorliegend mittels eines Betätigungshebels 23 zwischen der Freigabestellung (Fig. 11) und der Verriegelungsstellung schwenkbeweglich (Fig. 13). Der Betätigungshebel 23 ist zu diesem Zweck mit den beiden Verriegelungshaken V, V` mechanisch wirkverbunden. Vorliegend bilden die beiden schwenkbeweglichen Verriegelungshaken V, V` und der Betätigungshebel 23 einen Kniehebelmechanismus.

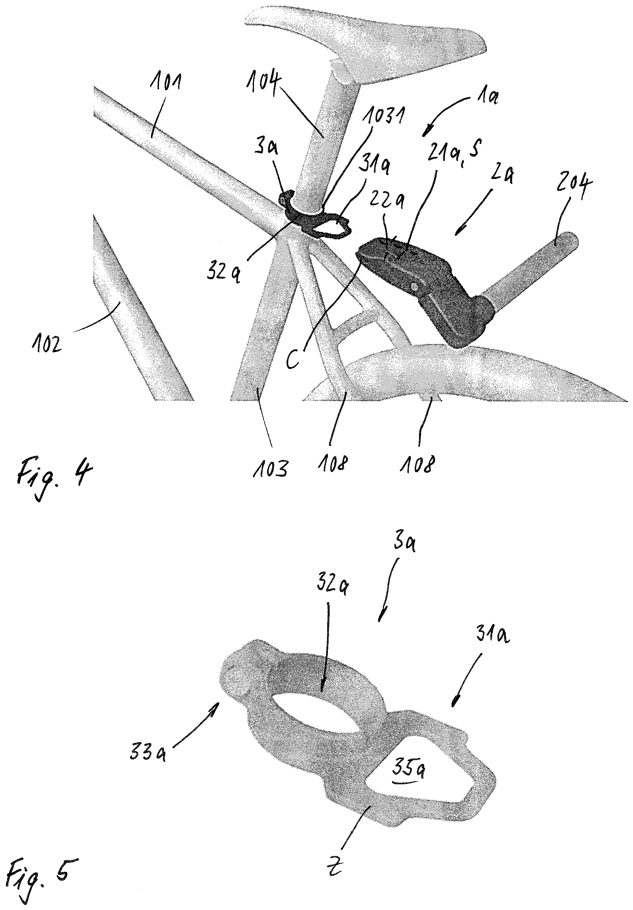

In den Fig. 4 bis 10 sowie 14 sind weitere Ausführungsformen erfindungsgemäßer Befestigungssysteme 1a, 1b, 1c, 1d, 1e gezeigt. Der Aufbau und die Funktionsweise der Befestigungssysteme 1a bis 1e sind in weiten Teilen übereinstimmend mit dem Befestigungssystem 1 nach den Fig. 1 bis 3. Die Befestigungssysteme 1a bis 1e können alternativ oder zusätzlich zu dem Befestigungssystem 1 zur Befestigung des Fahrrads 100 an dem Fahrradträger 200 verwendet werden. Bauteile und Abschnitte mit identischer Funktion werden nicht bei allen Ausführungsformen gesondert erläutert. Identisch gestaltete oder in ihrer Funktion übereinstimmende Bauteile und/oder Abschnitte werden bei den Befestigungssystemen 1a bis 1e mit identischen Bezugszeichenziffern unter Hinzufügung von Kleinbuchstaben gekennzeichnet. Zur Vermeidung von Wiederholungen wird zum einen auf die Offenbarung zu dem Befestigungssystem 1 verwiesen. Zudem werden nachfolgend in erster Linie wesentliche Unterschiede zwischen den Befestigungssystemen 1 bis 1e erläutert.

Im Unterschied zu dem Befestigungssystem 1 nach den Fig. 1 bis 3 weisen die Befestigungssysteme 1a, 1b, 1c nach den Fig. 4 bis 9 jeweils ein Adapterteil 3a, 3b, 3c auf, das zur Aufnahme eines zylindrischen Bauteils oder zylindrischen Bauteilabschnitts des Fahrrads 100 eingerichtet ist. Mittels Montageösen 32a, 32b, 32c kann das betreffende Adapterteil 3a, 3b, 3c auf einfache Weise an der betreffenden Stelle des Fahrrads 100 permanent angebracht werden. Im Einzelnen:
Bei dem Befestigungssystem 1a nach Fig. 4 ist das Adapterteil 3a zur permanenten Anbringung an der Sattelstütze 104 des Fahrrads 100 eingerichtet. Die Montageöse 32a des Adapterteils 3a ist zu diesem Zweck zur Aufnahme der Sattelstütze 104 und/oder eines oberen Stirnendes 1031 des Sattelrohrs 103 eingerichtet. Das Adapterteil 3a ist im Detail in Fig. 5 gezeigt.

Die Montageöse 32a ist maßlich auf einen Außenumfang der Sattelstütze 104 und/oder des oberen Stirnendes 1031 des Sattelrohrs 103 abgestimmt. Ein nicht näher bezeichneter Innendurchmesser der Montageöse 32a ist geringfügig größer als ein Außendurchmesser der Sattelstütze 104 und/oder des oberen Stirnendes 1031 des Sattelrohrs 103.

Zwecks Montage des Adapterteils 3a wird die Sattelstütze 104 demontiert. Hiernach kann das Adapterteil 3a mit der Montageöse 32 voran auf die Sattelstütze 104 oder alternativ auf das obere Stirnende 1031 des Sattelrohrs 103 aufgeschoben werden. Danach wird die Sattelstütze 104 wieder montiert.

Bei der gezeigten Ausführungsform weist das Adapterteil 3a zudem eine Schraubklemme 33a auf. Die Schraubklemme 33a dient zur Einstellung einer Weite der Montageöse 32a. Die Montageöse 32a ist im Bereich der Schraubklemme 33 in Radialrichtung geschlitzt. Hierdurch kann ein Innendurchmesser der Montageöse 32a mittels der Schraubklemme verändert werden. Durch ein Anziehen der Schraubklemme 33a wird der Innendurchmesser der Montageöse 32a verringert, wodurch das Adapterteil 3a fest anbringbar ist.

Wie im Übrigen in Fig. 4 gezeigt ist, kann das Adapterteil 3a aufgrund der vorhandenen Schraubklemme 33a und der Anbringung an dem oberen Stirnende 1031 des Sattelrohrs 103 als Ersatz für einen üblicherweise zu Befestigung des Sattelstütze 104 verwendeten Schnellspanner fungieren.

Die Verriegelungsgeometrie 31a ist radial beabstandet von der Montageöse 32a angeordnet und ragt bei der gezeigten Ausführungsform in permanent angebrachtem Zustand nach hinten von der Sattelstütze 104 ab.

Die Verriegelungsgeometrie 31a weist wiederum eine Verriegelungsöffnung 35a auf, die im Verriegelungszustand formschlüssig mit wenigstens einem beweglichen Verriegelungselement 22a des Verriegelungsmechanismus 21a zusammenwirkt.

Bei den in Fig. 4 bis 9 gezeigten Ausführungsformen sind die Verriegelungsmechanismen 21a, 21b, 21c jeweils als Schlossmechanismus S ausgeführt. Der Schlossmechanismus S funktioniert nach Art eines Gurtschlosses. Gurtschlösser sind in erster Linie aus Zurückhaltesystemen von Kraftfahrzeugen bekannt. Die Verriegelungsgeometrien 31a, 31b, 31c der Befestigungssysteme 1a, 1b, 1c nach den Fig. 4 bis 9 sind dementsprechend jeweils in Form einer Schlosszunge Z gestaltet. Die Verriegelungsöffnungen 35a, 35b, 35c sind jeweils an der Schlosszunge Z angebracht bzw. in Dickenrichtung der Schlosszunge Z durch diese erstreckt. Die Schlosszunge Z der Befestigungssysteme 1a, 1b, 1c weist eine Gestaltung auf, wie sie grundsätzlich von Gurtschlössern für Personen- oder Lastkraftwagen bekannt ist. Entsprechendes gilt für die Gestaltung der Befestigungseinheiten 2a, 2b, 2c. Diese weisen jeweils einen Aufnahmeschlitz C auf. In dem Verriegelungszustand ist die Schlosszunge Z in den Aufnahmeschlitz C eingesteckt und wenigstens ein nicht näher gezeigtes bewegliches Verriegelungselement 22a, 22b, 22c des Schlossmechanismus S wirkt formschlüssig mit der Schlosszunge Z, insbesondere der jeweiligen Verriegelungsöffnung 35a, 35b, 35c, zusammen.

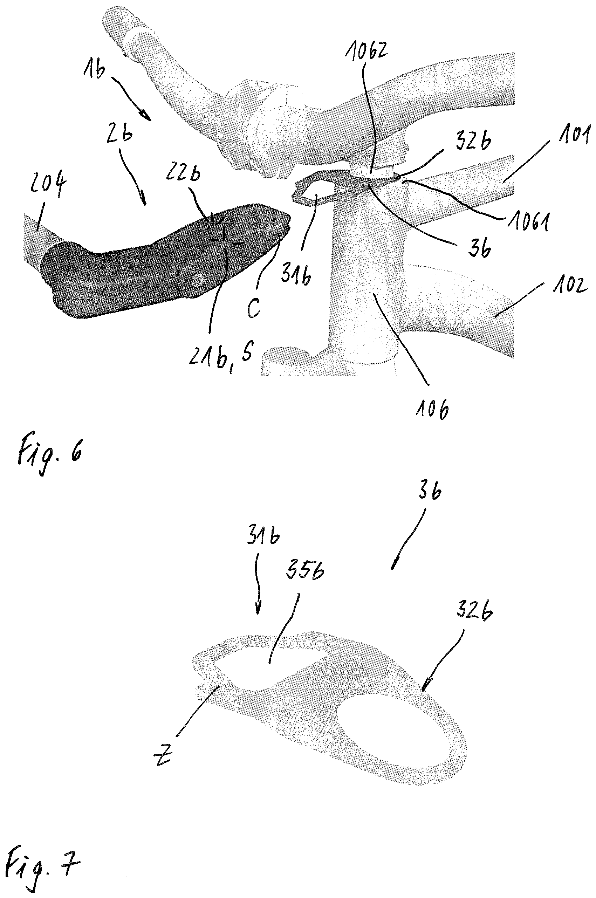

Bei dem Befestigungssystem 1b nach Fig. 6 ist das Adapterteil 3b zur permanenten Anbringung an dem Steuerrohr 106 des Fahrrads 100 eingerichtet. Die Montageöse 32b des Adapterteils 3b ist folglich zur Aufnahme eines oberen Stirnendes 1061 und/oder zur Aufnahme eines Lenklagers 1062 des Fahrrads 100 eingerichtet. Ein Innendurchmesser (ohne Bezugszeichen) der Montageöse 32b ist folglich auf einen Außendurchmesser des Lenklagers 1062 und/oder des oberen Stirnendes 1061 des Steuerrohrs 106 maßlich abgestimmt. In permanent angebrachtem Zustand ragt die Verriegelungsgeometrie 31b vorliegend nach vorn.

Zur permanenten Anbringung des Adapterteils 3b ist eine Demontage des Lenkervorbaus (ohne Bezugszeichen) des Fahrrads 100 erforderlich. In demontiertem Zustand des Lenkervorbaus kann das Adapterteil 3b axial auf das Lenklager 1062 und/oder das obere Stirnende 1061 des Steuerrohrs 106 aufgeschoben werden.

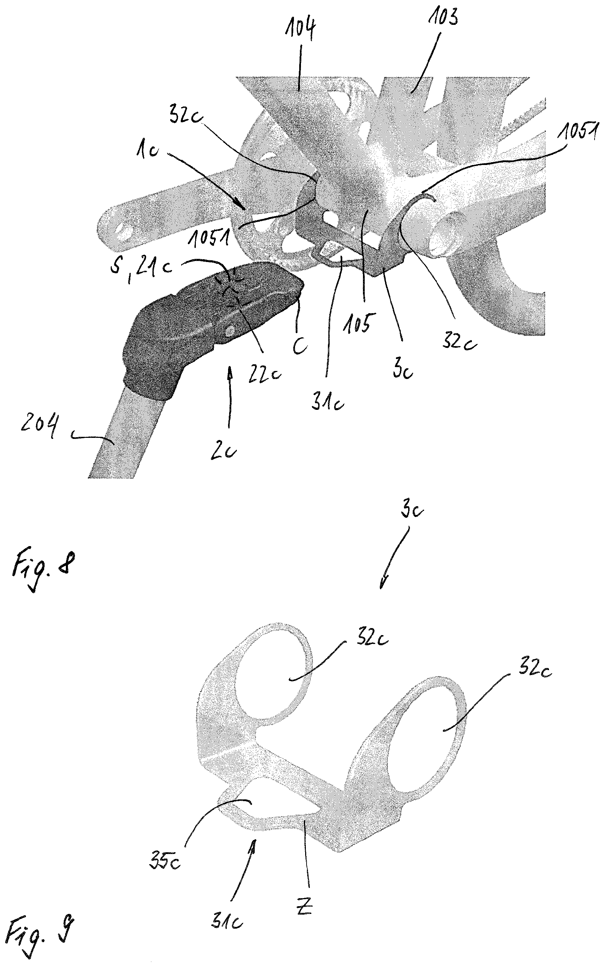

Bei dem Befestigungssystem 1c nach Fig. 8 ist das Adapterteil 3c zur permanenten Anbringung an dem Tretlagergehäuse 105 des Fahrrads 100 eingerichtet. Das Adapterteil 3c weist zwei koaxiale Montageösen 32c auf, die zur Aufnahme axial gegenüberliegender Stirnenden 1051 des Tretlagergehäuses 105 eingerichtet sind. Ein Innendurchmesser (ohne Bezugszeichen) der Montageösen 32c ist folglich auf einen Außendurchmesser der Stirnenden 1051 des Tretlagergehäuses 105 maßlich abgestimmt.

In permanent angebrachtem Zustand ragt die Verriegelungsgeometrie 31c auf Höhe einer Unterkante des Tretlagergehäuses 105 nach vorn. Dabei ist die Verriegelungsgeometrie 31c vorliegend in Bezug auf die Axialrichtung mittig zwischen den beiden koaxialen Montageösen 32c angeordnet.

Zur permanenten Anbringung des Adapterteils 3c ist eine Demontage der Tretkurbeln (ohne Bezugszeichen) des Fahrrads 100 erforderlich. In demontiertem Zustand der Tretkurbeln kann das Adapterteil 3c an den Stirnenden 1051 des Tretlagergehäuses 105 angebracht werden. Hiernach werden die Tretkurbeln wieder montiert.

Die Adapterteile 3 bis 3c der Befestigungssysteme 1 bis 1c können aus jedem für den vorliegenden Zweck geeigneten Material gefertigt sein.

Im Speziellen ist das Adapterteil 3 vorliegend aus einem hochbeanspruchbaren Kunststoff gefertigt. Die Fertigung erfolgt mittels Spritzgusses. Alternativ ist eine Fertigung aus Metall möglich. Beispielsweise kann das Adapterteil 3 auch aus Aluminiumdruckguss gefertigt sein.

Die jeweils mit der Schlosszunge Z versehenen Adapterteile 3a, 3b, 3c sind bevorzugt aus Metall gefertigt. Aufgrund der Gestaltgebung des Adapterteils 3a bietet sich eine Fertigung aus Aluminiumdruckguss an. Es ist aber auch eine Fertigung aus einem ausreichend hochbeanspruchbaren Kunststoff möglich.

Die Adapterteile 3b, 3c sind vorliegend aus Metallblech gefertigt und als Stanz-Biegebauteile ausgeführt. Alternativ ist eine Fertigung aus einem ausreichend hochbeanspruchbaren Kunststoff mittels Spritzgießens denkbar.

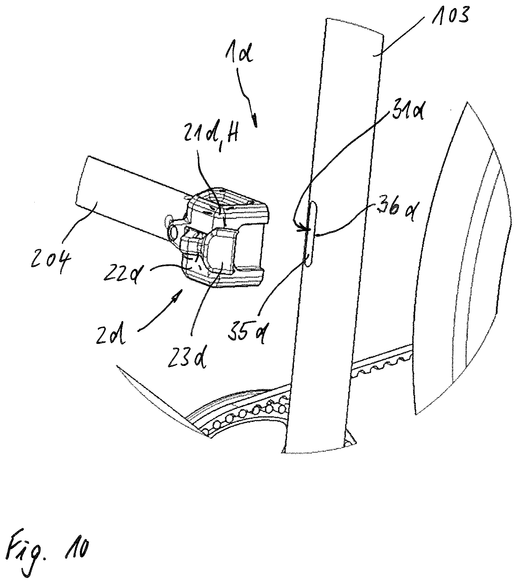

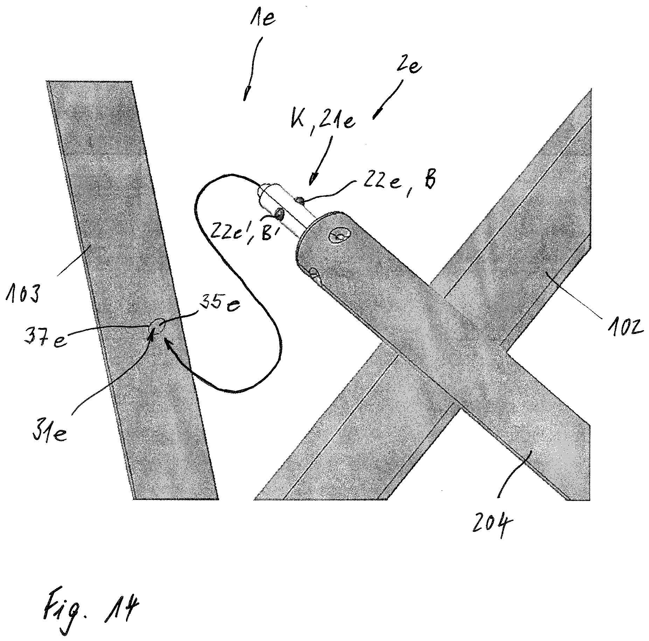

Die Befestigungssysteme 1d, 1e nach den Fig. 10 und 14 unterscheiden sich dahingehend von den Befestigungssystemen 1 bis 1c, dass kein Adapterteil vorhanden ist. Stattdessen ist die jeweilige Verriegelungsgeometrie 31d, 31e unmittelbar an einem Bauteil des Fahrrads 100 ausgebildet. Die Verriegelungsgeometrien 31d, 31e sind vorliegend an dem Sattelrohr 103 ausgebildet. Es ist aber auch möglich, dass die Verriegelungsgeometrien an einer anderen hierfür geeigneten, lasttragenden Stelle des Fahrrads ausgebildet sind.

Die Verriegelungsgeometrien 31d, 31e sind bei den gezeigten Ausführungsformen jeweils durch eine spanabhebende Bearbeitung des Rahmens des Fahrrads 100 ausgebildet. Dabei ist die Verriegelungsgeometrie 31d als Ausfräsung 36d ausgeführt. Die Verriegelungsgeometrie 31e ist als Bohrung 37e ausgeführt.

Die Ausfräsung 36d bildet eine Verriegelungsöffnung 35d, die vorliegend nach Art eines Langlochs geformt ist. Bei der gezeigten Ausführungsform ist die Ausfräsung 36d in Längsrichtung des Sattelrohrs 103 mittig auf der Innenseite des Rahmendreiecks positioniert und parallel zur Längsrichtung des Sattelrohrs 103 längserstreckt.

Bei dem Befestigungssystem 1d nach Fig. 10 ist der Verriegelungsmechanismus 21d identisch zu dem Verriegelungsmechanismus 21 der Ausführungsform nach den Fig. 1 und 3 als Hakenmechanismus H ausgeführt (siehe Fig. 11, 12, 13). Die Ausfräsung 36d ist folglich in Form einer Nut N mit einem Hinterschnitt T ausgebildet. Die diesbezüglichen Darstellungen in den Fig. 11 bis 13 gelten sowohl für eine Anbringung der Nut an dem Adapterteil 3 als auch für eine (unmittelbare) Ausbildung der Nut an dem Steuerrohr 103 oder jedem sonstigen hierfür geeigneten Bauteil des Fahrrads. Die Bezugszeichen 3 und 103 sind deshalb in den Fig. 11, 12 und 13 in runde Klammern gesetzt.

Die Bohrung 37e des Befestigungssystems 1e nach Fig. 14 ist vorliegend in Längsrichtung des Oberrohrs 103 mittig und seitlich außen liegend positioniert.

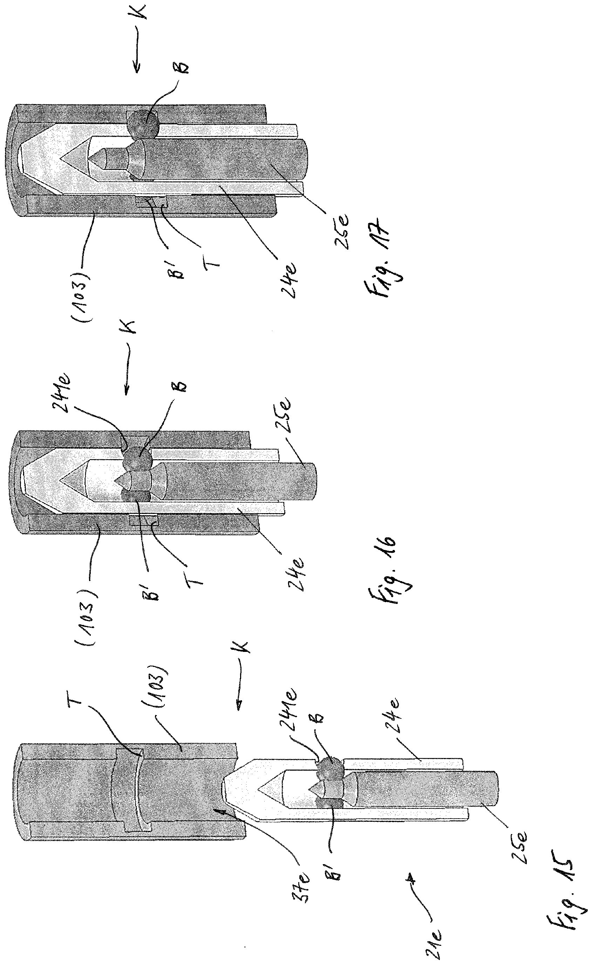

Der Verriegelungsmechanismus 21e ist bei der gezeigten Ausführungsform als Sperrkugelmechanismus K ausgeführt. Dessen prinzipielle Funktionsweise ist schematisch in den Fig. 15, 16 und 17 verdeutlicht.

Der Sperrkugelmechanismus K sieht als bewegliches Verriegelungselement 22e wenigstens eine bewegliche Sperrkugel B vor. Die Bohrung 37e weist einen Hinterschnitt T auf. In der Verriegelungsstellung wirkt die wenigstens eine Sperrkugel B formschlüssig mit dem Hinterschnitt T zusammen (siehe Fig. 17).

Im Speziellen weist die Befestigungseinheit 2e vorliegend eine Außenhülse 24e und einen radial innenliegenden Dorn 25e auf. Die Außenhülse 24e weist eine koaxiale Sackbohrung (ohne Bezugszeichen) auf, in welcher der Dorn 25e axial relativbeweglich 24e aufgenommen ist. Die Außenhülse 24e weist zudem radiale Ausnehmungen 241e auf. Der Sperrkugelmechanismus K weist bei der gezeigten Ausführungsform zwei Sperrkugeln B, B' auf. Diese sind in Radialrichtung zwischen einem Außenumfang des Dorns 25e und einem Innenumfang der Außenhülse 24e angeordnet. Der Dorn 25e weist einends einen radialen Rücksprung mit einer Schulter auf, an welcher die Sperrkugeln B, B' jedenfalls in der Freigabestellung (siehe Fig. 15) axial anliegen. Bei einer axialen Relativbewegung des Dorns 25e zu der Außenhülse 24e werden die Sperrkugeln B, B` unter Einwirkung der Schulter radial durch die Ausnehmungen 241 e bewegt. Im Verriegelungszustand (Fig. 17) überragen die Sperrkugeln B, B' einen Außendurchmesser der Außenhülse 24e. Der Außendurchmesser der Außenhülse 24e ist auf einen Innendurchmesser (ohne Bezugszeichen) der Bohrung 37e maßlich abgestimmt und geringfügig kleiner.

Zur Verriegelung des Sperrkugelmechanismus K wird die Befestigungseinheit 2e mit der Außenhülse 24e voran in die Bohrung 37e eingeführt, bis die radialen Ausnehmungen 241e der Außenhülse 24e axial auf Höhe des Hinterschnitts T der Bohrung 37e positioniert sind. Um eine passgenaue Positionierung zu gewährleisten, kann eine Anschlaggeometrie vorhanden sein. Hiernach wird der Dorn 25e axial in die Außenhülse 24e hineingedrückt. Hierdurch werden die Sperrkugeln B, B' radial durch die Ausnehmungen 241e hindurchgedrückt und axial formschlüssig an den Hinterschnitt T angelegt.

## Patentansprüche

1. Befestigungssystem (1, 1a bis 1e) zur Befestigung eines Fahrrads (100) an einem Fahrradträger (200), aufweisend
eine Befestigungseinheit (2, 2a bis 2e) mit einem Verriegelungsmechanismus (21, 21a bis 21e), wobei die Befestigungseinheit (2, 2a bis 2e) zur Montage an einem Trägerbauteil (204) des Fahrradträgers (200) eingerichtet ist, und
eine Verriegelungsgeometrie (31, 31a bis 31e), die komplementär zu dem Verriegelungsmechanismus (21, 21a bis 21e) gestaltet und dazu eingerichtet ist, lösbar formschlüssig mit dem Verriegelungsmechanismus (21, 21a bis 21e) zusammenzuwirken, wobei die Verriegelungsgeometrie (31, 31a, 31b, 31c) an einem Adapterteil (3, 3a, 3b, 3c) ausgebildet ist, das zur permanenten Anbringung an einer hierfür definierten Stelle des Fahrrads (100) eingerichtet ist, oder wobei die Verriegelungsgeometrie (31d, 31e) an einem Bauteil (103) des Fahrrads (100) ausgebildet ist,
und wobei der Verriegelungsmechanismus (21, 21a bis 21e) überführbar ist zwischen einem Verriegelungszustand, in welchem der Verriegelungsmechanismus (21, 21a bis 21e) lösbar formschlüssig mit der Verriegelungsgeometrie (31, 31a bis 31e) verriegelt ist, und einem Freigabezustand, in welchem die Verriegelung aufgehoben ist.

2. Befestigungssystem (1) nach Anspruch 1, **dadurch gekennzeichnet, dass** das Adapterteil (3) zur permanenten Anbringung an einem Oberrohr (101) und/oder einem Unterrohr (102) und/oder einem Sattelrohr (103) des Fahrrads eingerichtet ist.

3. Befestigungssystem (1) nach Anspruch 2, **dadurch gekennzeichnet, dass** das Adapterteil (3) zur Schraubbefestigung eingerichtet ist und wenigstens eine Aufnahmebohrung (33) zur Aufnahme einer Befestigungsschraube (34) aufweist.

4. Befestigungssystem (1) nach Anspruch 3, **dadurch gekennzeichnet, dass** wenigstens zwei Aufnahmebohrungen (33) vorhanden sind, die in einem Abstand von 65 mm oder 85 mm angeordnet sind, insbesondere wobei die Verriegelungsgeometrie (31) in Längserstreckungsrichtung des Adapterteils (3) mittig zwischen den Aufnahmebohrungen (33) angeordnet ist.

5. Befestigungssystem (1a, 1b, 1c) nach Anspruch 1, **dadurch gekennzeichnet, dass** das Adapterteil (3a, 3b, 3c) wenigstens eine Montageöse (32a, 32b, 32c) aufweist, die zur Aufnahme eines zylindrischen Bauteils oder Bauteilabschnitts des Fahrrads (100) eingerichtet ist und mittels derer das Adapterteil (3a, 3b, 3c) permanent an dem zylindrischen Bauteil oder Bauteilabschnitt anbringbar ist, insbesondere wobei das Adapterteil (3a) zur permanenten Anbringung an einer Sattelstütze (104) des Fahrrads (100) eingerichtet ist, wobei die Montageöse (32a) zur Aufnahme der Sattelstütze (104) und/oder eines oberen Stirnendes (1061) eines Sattelrohrs (103) des Fahrrads (100) eingerichtet ist, insbesondere wobei die Montageöse (32a) geschlitzt ist und das Adapterteil (3a) eine Schraubklemme (33a) aufweist, die zur Einstellung einer Weite der Montageöse (32a) eingerichtet ist.

6. Befestigungssystem (1b) nach Anspruch 5, **dadurch gekennzeichnet, dass** das Adapterteil (3b) zur permanenten Anbringung an einem Steuerrohr (106) des Fahrrads (100) eingerichtet ist, wobei die Montageöse (32b) zur Aufnahme eines oberen Stirnendes (1061) des Steuerrohrs (106) und/oder eines Lenklagers (1062) des Fahrrads (100) eingerichtet ist.

7. Befestigungssystem (1c) nach Anspruch 5, **dadurch gekennzeichnet, dass** das Adapterteil (3c) zur permanenten Anbringung an einem Tretlagergehäuse (105) des Fahrrads (100) eingerichtet ist und zwei koaxiale Montageösen (32c) aufweist, die zur Aufnahme axial gegenüberliegender Stirnenden (1051) des Tretlagergehäuses (105) eingerichtet sind, insbesondere wobei die Verriegelungsgeometrie (31c) in Bezug auf die Axialrichtung mittig zwischen den beiden koaxialen Montageösen (32c) angeordnet ist.

8. Befestigungssystem (1d, 1e) nach Anspruch 1, **dadurch gekennzeichnet, dass** die Verriegelungsgeometrie (31d, 31e) an dem Rahmen des Fahrrads (100) ausgebildet ist, insbesondere wobei die Verriegelungsgeometrie (31d, 31e) durch eine spanabhebende Bearbeitung des Rahmens des Fahrrads (100) in Form einer Ausfräsung (36d) oder einer Bohrung (37e) ausgebildet ist.

9. Befestigungssystem (1, 1a bis 1e) nach einem der vorhergehenden Ansprüche, **dadurch gekennzeichnet, dass** die Verriegelungsgeometrie (31, 31a bis 31e) wenigstens eine Verriegelungsöffnung (35, 35a bis 35e) aufweist, dass der Verriegelungsmechanismus (21, 21a bis 21e) wenigstens ein bewegliches Verriegelungselement (22, 22a, bis 22e) aufweist, wobei das bewegliche Verriegelungselement (22, 22a bis 22e) in der Verriegelungsstellung formschlüssig in die wenigstens eine Verriegelungsöffnung (35, 35a bis 35e) eingreift.

10. Befestigungssystem (1, 1d) nach Anspruch 9, **dadurch gekennzeichnet, dass** der Verriegelungsmechanismus (21, 21d) ein Hakenmechanismus (H) ist, wobei das wenigstens eine bewegliche Verriegelungselement (22) ein schwenkbeweglicher Verriegelungshaken (V) ist, und wobei die wenigstens eine Verriegelungsöffnung (35, 35d) eine Nut (N) mit einem Hinterschnitt (T) ist, und wobei der wenigstens eine Verriegelungshaken (V) in der Verriegelungsstellung formschlüssig mit dem Hinterschnitt (T) der Nut (N) zusammenwirkt.

11. Befestigungssystem (1e) nach Anspruch 9, **dadurch gekennzeichnet, dass** der Verriegelungsmechanismus (21e) ein Sperrkugelmechanismus (K) ist, wobei das wenigstens eine bewegliche Verriegelungselement (22e) eine bewegliche Sperrkugel (B) ist, wobei die wenigstens eine Verriegelungsöffnung (35e) eine Bohrung (37e) mit einem Hinterschnitt (T) ist, und wobei die wenigstens eine Sperrkugel (B) in der Verriegelungsstellung formschlüssig mit dem Hinterschnitt (T) der Bohrung (37e) zusammenwirkt.

12. Befestigungssystem (1a, 1b, 1c) nach Anspruch 9, **dadurch gekennzeichnet, dass** der Verriegelungsmechanismus (21a, 21b, 21c) ein Schlossmechanismus (S) nach Art eines Gurtschlosses ist, wobei die Verriegelungsöffnung (35a, 35b, 35c) an einer Schlosszunge (Z) ausgebildet ist, die in der Verriegelungsstellung in einen Aufnahmeschlitz (C) der Befestigungseinheit (2a, 2b, 2c) eingesteckt ist und formschlüssig mit dem wenigstens einen beweglichen Verriegelungselement (22a, 22b, 22c) zusammenwirkt.

13. Fahrradträger (200) mit einem Trägerbauteil (204) und einer an dem Trägerbauteil (204) montierten Befestigungseinheit (2, 2a bis 2e) eines Befestigungssystems (1, 1a bis 1e) nach einem der vorhergehenden Ansprüche.

14. Fahrrad (100) mit einer Verriegelungsgeometrie (31, 31a bis 31e) eines Befestigungssystems (1, 1a bis 1e) nach einem der Ansprüche 1 bis 12, wobei die Verriegelungsgeometrie (1, 1a, 1b, 1c) an einem permanent an dem Fahrrad angebrachten Adapterbauteil (3, 3a, 3b, 3c) ausgebildet ist oder wobei die Verriegelungsgeometrie (31d, 31e) an einem Bauteil (103) des Fahrrads ausgebildet ist.

15. Anordnung (A) mit einem Fahrradträger (200) nach Anspruch 13 und mit einem Fahrrad nach Anspruch 14.
